# EUROPEAN PATENT SPECIFICATION

(11) **EP 1 701 866 B1**
(45) Date of publication and mention of the grant of the patent: **07.05.2008**
(21) Application number: 05700752.8
(22) Date of filing: 07.01.2005
(51) Int. Cl.: B60Q 3/02, F24F 13/078

(54) **STORAGE SYSTEM FOR ELECTRICAL EQUIPMENT IN VEHICLES**
LAGERUNGSSYSTEM FÜR ELEKTRISCHE GERÄTE IN FAHRZEUGEN
SYSTEME DE RANGEMENT POUR EQUIPEMENT ELECTRIQUE DANS DES VEHICULES

(30) Priority: 09.01.2004 GB 0400426
(43) Date of publication of application: 20.09.2006
(73) Proprietor: Bombardier Transportation GmbH, 10785 Berlin (DE)
(72) Inventor: VANBERTEN, Philippe, F-59990 Preseau (FR)
(74) Representative: Broydé, Marc
(86) International application number: PCT/EP2005/000101
(87) International publication number: WO 2005/068256

(56) References cited:
- DE-A1- 4 223 647
- US-A- 4 182 532
- US-A- 4 485 523
- US-A- 5 136 486
- US-A- 6 082 879

## Description

The present invention relates to a railway vehicle.

The efficient storage and maintenance of electrical equipment within a vehicle is an increasing problem. Electrical equipment within vehicles is increasing in size and amount due to, among other things, the automation of equipment, electrical safety equipment, surveillance equipment, monitoring equipment, and entertainment equipment for use within the vehicle. In typical passenger vehicles, the solutions have involved the use of similar racks, cabinets, and specialised rooms as used within buildings. However, at least a 5 to 10% capacity loss can occur, for example within passenger rail vehicles, due to this type of inefficient storage. In almost all vehicle types there is a reduction in space for both passengers and service personnel due to the need to store electrical and other ancillary equipment within the vehicle.

Other ways of storing equipment are required. US2003106962 discloses an under floor air cooled entertainment system for passengers that is installed in an aircraft. The location of the equipment is under the aircraft aisles adjacent to the passenger seats. Although efficient storage is achieved, the storage structure is not designed for regular maintenance.

In addition to space efficiency, energy efficiency is another high requirement for most vehicles. Typically a vehicle would have a separate cooling system, in addition to the passenger environmental system, for removing the excess heat produced by the increasing needs of electrical equipment. In DE19914565, a cooling system is disclosed that uses a cooling agent and integrated piping for cooling and transferring excess heat to the vehicle's outer skin. In DE4223647, an air-cooling system for under floor energy supply equipment is also required. The extra power required for these systems would put added pressure on a vehicle's energy source, resulting in reduced operating performance and most likely increased operating costs.

In US6273181, a cooling system for cooling electronic parts is disclosed, where the electronic components are installed within a dust and waterproof case, with the case having a heat sink attached so that airflow over the case removes the excess heat produced. In a similar system for lighting, US6203180 discloses a lighting system fur an aircraft where the lighting installation is in the aircraft's ceiling panels. However, there is no mention of placement, cooling requirements or maintenance of the equipment.

Another lighting system, US20030048641, describes the use of a casing with a channel of thermally conductive material as a heat sink. However, there is no mention of how to avoid heating the passenger compartment with the excess heat. Typically these systems, and those of US6273181, US6203180 and US 20030048641, are intended for a smaller class of electronic component and do not address, in general, the majority of electronic equipment which may emit more heat and can be more bulky and heavier to store in such systems.

In GB2343164 a heating/cooling system that supplies ventilation to a passenger compartment is used to cool an electronic component in a ventilated casing situated within the air intake of the air duct. However, in the case of electronic failure there is the possibility of foul or toxic air flowing through to the passenger compartment.

A similar situation may arise for US2003106962, where an air cooling system is in air communication with the passenger air cooling system. As well, US2902917 uses lighting within the passenger air duct system of a vehicle. However, there is no discrimination between using the main passenger air duct or alternative ducts, or in fact for using the air duct system as a cooling system. In such systems, the air would also require additional cooling before entering the passenger compartment, putting added strain on the vehicle's energy source.

Generic US 5,136,486 discloses a fixture for a fluorescent lamp, which includes a diffuser panel. The diffuser panel has a frame and longitudinal elements supported by the frame and spaced apart from one another. At least some of the elements are constructed of a material to allow diffusion of impinging light. The diffuser panel also functions as an air diffuser. Provision of a nozzle in the base of the fixture allows air to flow through the panel by a sucking effect created by high velocity forced air flowing through the nozzle. This results in fixture cleaning and temperature equalization. The fixture is particularly adapted to be mounted in a moving vehicle. For this purpose, the panel is designed to be tamper-resistant and to provide easy maintenance. The diffuser panel, when a latch is opened, may be lowered by rotation to provide access to the lamp and ballast. When the fixture is installed in a public vehicle, a handrail is provided which forms part of the panel lowering mechanism. Other arrangements provide a fixture having a diffuser with a central open portion and a pair of side panels extending across the ceiling of a vehicle. A pair of nozzle elements are disposed above each side panel. Again, high velocity air directed through one portion in of a nozzle element will cause air to be drawn through the open central portion of the fixture. Either the entire diffuser or the side panels may be lowered to clean the fixture or replace the lamps.

There is therefore a need for improved storage and maintenance of electrical equipment, and improved energy efficiency within a railway vehicle.

To address this need, there is provided a railway vehicle according to claim 1.

It is advantageous to have existing infrastructure in the vehicle that can be reused such as an air-duct system positioned within the volume. In this case, the air-duct system can also be used to cool the electrical equipment when in the stowed position.

In this position, the air flow through the fluid flow system duct removes the excess heat from the electrical equipment. As well, having existing infrastructure allows the apparatus to be retrofitted within older vehicles. In another preferred embodiment, the volume that accommodates the supports can form a longitudinal volume that can be exploited to permit ventilation of the arranged equipment.

The air-duct system expels used air from within the vehicle's passenger compartment to the environment outside the vehicle. This directs the excess heat away from the passenger compartment towards the outlet port and the exterior of the vehicle and avoids heating the passenger compartment. Exploiting the air-duct system in this way can avoid the excess heat from entering the passenger compartment, which further avoids the need to over-size the amount of cooling required for the existing fresh air ventilation system of the vehicle. In addition to expelling used air from the vehicle the air-duct does not re-circulate the used air within the vehicle. This is particularly advantageous as it enhances the safety of passengers and operators within the vehicle since, if the electrical equipment does overheat or malfunction the resulting foul or toxic air will not be directed back into the passenger compartment.

The volume has at least one intake port and at least one outlet port for fluid communication. These ports provide air to flow through the volume to cool the electrical equipment within. One or more filters for the fluid may be provided, for example affixed to each intake port, to avoid the soiling of electrical equipment by any contaminants within the environment outside the volume.

The air-duct system includes at least one extraction fan to provide the air flow, for example using motorised fans and the like to provide air flow from the inner environment of the vehicle to the outer environment of the vehicle, as in the above case of expelling used air.

The volume is comprised of at least one access opening with at least one access panel, (also known as access door or trim panels), covering each access opening. For example, since the volume may be within an existing air-duct, then access openings and access panels can be retrofitted to the air-duct to allow authorised personnel to access the equipment. Since unauthorised personnel should not access the electrical equipment, the access panels can be locked and used only by authorised personnel, such as, but not limited to, maintenance personnel. The electrical equipment can be accessed through the access panels allowing maintenance personnel to carry out maintenance, observations, measurements, or tests on the electrical equipment that may still be connected and in operation.

Another preferred embodiment allows at least one portion of the access panel to be made of, but not limited to, transparent, translucent, light penetrable material or light penetrable panels. In such cases, illuminating equipment can be stored in the supports and used for lighting within the vehicle. It is particularly advantageous to have a fluid flow system cooling the illuminating equipment, especially in the case of light emitting diodes in which cooling results in reduced energy consumption and increased life expectancy of the diodes.

The support comprises terminals that provide an electrical connection for the electrical equipment. Such terminals being, among other things, any socket, plug, or pins that can connect the electrical equipment electrically within the vehicle to the corresponding counterpart electrical equipment.

An alternative embodiment uses at least one supporting arm that can hold the access panel at an angle that is suitable for a person to access the electrical equipment. For example, if a support were affixed to the access panel then the access panel and the electrical equipment that is retained by the support will need to be accessible to maintenance crew and the like. Alternatively, if the support were not affixed to the access panel, then the access panel should open to a position such that the support may be accessed to move the electrical equipment between the stowed position and the unstowed position.

The supporting arms should allow and support the access panel to open in a controlled fashion, for example the supporting arms can be, but are not limited to, scissor arms, gas springs, dampers, lid supports, door checks, lid supports or stays, soft down supports or stays, spring loaded supports or stays, folding brackets, or telescopic props, or a system of counter balances and weights.

The volume is located between the vehicle's inner ceiling and roof and the access panels are installed within the inner ceiling of the vchicle, since this allows gravity to assist in lowering (or opening) the access panel to the unstowed position. In combination with a supporting arm as described previously, the access panel is safe and easy for maintenance crew to open, and access the electrical equipment. For example, the electrical equipment can be replaced by accessing the equipment through unlocking, unplugging, and disconnecting the electrical equipment from the terminals of the support. The replacement of electrical equipment can be done in the same manner as that for replacing equipment within an electrical cabinet or rack.

In another preferred embodiment the support comprises an articulated structure that guides the electrical equipment between the stowed position and the unstowed position, for example, if an access panel and support arm could not support the electrical equipment (due to among other things weight or size), then an articulated structure may be used to hold and store the electrical equipment. The support can be affixed to support rails within the volume or alternatively the support can be affixed to the walls enclosing the volume.

In a preferred embodiment, the support can be designed to hold a portion of the electrical equipment in a position that is substantially parallel to an access panel. As an example of this operation, when the support and the access panel are in their respective stowed positions, then the support can be held parallel to the access panel. If the access panel is moved to the unstowed position the support may keep the electrical equipment in the original parallel position until the electrical equipment is accessed then, when the electrical equipment is accessed, the support guides the electrical equipment to an unstowed position, which may also be substantially parallel to the unstowed access panel. In another example, the support could simultaneously lower the electrical equipment along with the access panel, keeping both substantially parallel to each other.

In a preferred embodiment, the access panel is within, or a part of, the ceiling trim of the inner ceiling of the vehicles compartment, with the volume comprising a portion of the upper walls and the roof of the vehicle. The support stows the electrical equipment wholly or at least partially within this volume that is parallel to the access panel when the access panel is in the stowed position, (or closed in this case). Alternatively, the access panel and support may cooperate such that as the access panel closes, the support simultaneously stows the electrical equipment in the stowed position.

In an alternative embodiment, the support comprises an articulated structure, substantially similar but not limited to a quadrilateral or parallelogram type articulated structure. One end of the articulated structure defines at least a first axis of rotation and at least one portion of the articulated structure is connected to the electrical equipment by a linkage. As the articulated structure is rotated about the first axis of rotation between the stowed position and the unstowed position the electrical equipment is pivoted from between a stowed position and an unstowed position. Advantageously, the articulated structure can be designed such that the linkage defines a second axis of rotation, wherein the articulated structure rotates about the first axis of rotation between the stowed position and the unstowed position. In a preferred embodiment, the electrical equipment is simultaneously rotated about the second axis of rotation between the stowed position and unstowed position. In a preferred embodiment, as the electrical equipment is simultaneously rotated about the second axis of rotation, the electrical equipment is translated in relation to the volume between the stowed position and the unstowed position.

The preferred articulated structure comprises a quadrilateral or parallelogram type of articulated structure, as already noted. However, other forms of articulated structures and supporting arms may be employed, when required. References herein to the articulated structure and/or supporting arm should also be taken to include the other forms of articulated structures and/or supporting arms, where appropriate. For example, an articulated structure and a supporting arm can each have at least one axis of rotation and at least one movable member for each axis of rotation. This is advantageous since it allows each articulated structure and supporting arm to have numerous axes of rotation when mounted to the access opening and access panel and/or support. This allows the access panel and/or the support to be rotated and/or translated in relation to the volume, about each axis of rotation, between the stowed position and the unstowed position.

For example, the articulated structure may have numerous axes of rotation, such as a first movable joint that defines a first access axis of rotation on one edge of the access opening, a second movable joint that defines a second access axis of rotation, and a third movable joint that defines a third access axis of rotation connected to the access panel and/or support. Similarly, there can be at least one supporting arm, having a similar range of motion to that of the articulated structure, supporting the access panel and/or support. This allows the access panel and/or support to be supported when rotated and/or translated in relation to the volume about each axis of rotation between the stowed position and the unstowed position.

In a preferred embodiment of the apparatus there is a plurality of translational guides mounted within each support. These translational guides may be, but are not limited to, drawer slides, nylon sliders and nylon angle guides, ball bearing rollers, door guides, cavity slides, tracks and carriages. The electrical equipment can be mounted directly onto the translational guides. Advantageously, the translational guides would allow the electrical equipment to be accessed by translationally guiding the electrical equipment out of, or off the support when the support is in the unstowed position, or between the unstowed and stowed positions. In addition, as the electrical equipment is accessed, it can be unlocked, unplugged and disconnected from the terminals of the support as the electrical equipment is translationally guided out of, or off the support. Alternatively, the electrical equipment may still be connected to the terminals of the support as it is translationally guided out of the support, the electrical equipment being disconnected before being taken off the support.

Alternatively, a container or standardized drawer may be mounted on the translational guides with the electrical equipment received within a container. The container being accessed in a similar manner as previously discussed.

The vehicle may be a railway passenger carriage with the apparatus efficiently stowing the electrical equipment within the inner ceiling and air-duct (used for expelling used air) of the passenger carriage. This is particularly advantageous since there is an increase in the spatial capacity of the railway passenger carriage that can result in an increase in the seating capacity or luggage capacity. Another advantage is the improvement in passenger safety since, in the event of electrical equipment malfunction, foul or toxic air is not directed back within the passenger compartment.

Embodiments of the present invention will now be described by way of example only having reference to the accompanying drawings, in which :-
Figure 1 is a cross sectional view of an apparatus according to a first embodiment of the present invention;
Figure 2 is a cross sectional view of an apparatus according to an alternative preferred embodiment of the present invention;
Figure 3 is a cross sectional view of an apparatus according to a further alternative preferred embodiment of the present invention;
Figure 4 is a cross sectional view of a support for storing electrical equipment according to a preferred aspect of the present invention of Figures 1 and 3;
Figure 5 is a perspective view of an aspect of a support that can be used in a preferred embodiment of the invention.

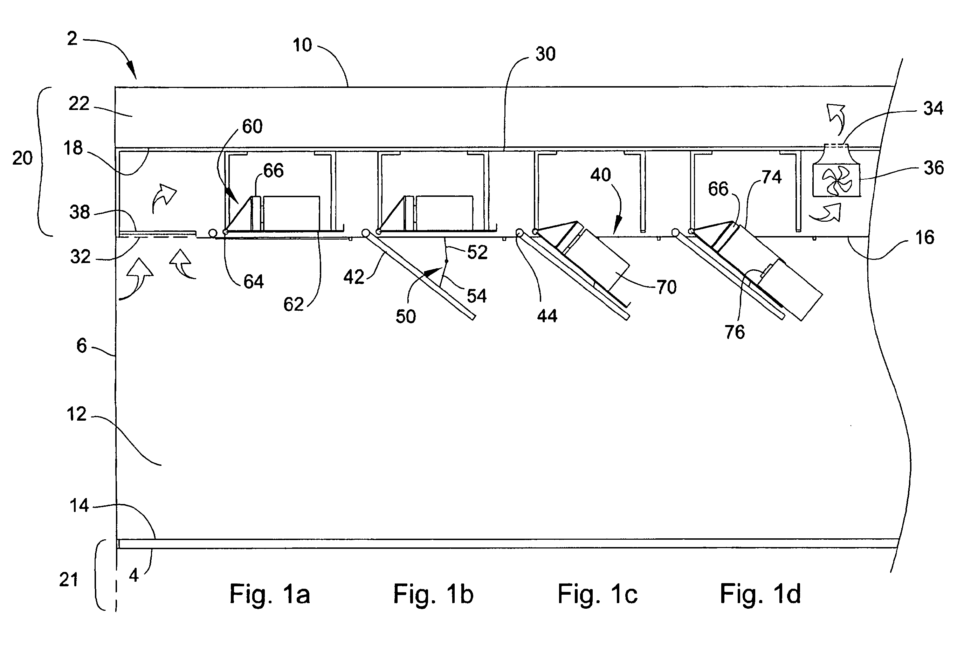

Referring to figure 1, there is shown a railway passenger carriage, generally indicated as 2. For ease of reference, the various aspects and embodiments of the present invention will be described and illustrated having reference to the railway passenger carriage, such as shown in figure 1.

The railway passenger carriage 2 of figure 1 has a chassis (not shown) on which is built a vehicle base 4. The vehicle base has main walls 6 extending upwards towards the roof 10, (only two walls are shown in figure 1), where the walls are of a design suitable for railway passenger carriages. The walls 6, are connected at the upper end to the roof 10, for example with a flush join, and are connected to the vehicle base 4. The remaining edges of the walls 6 connect with each other defining an inner space between the walls 6, the roof 10 and the vehicle base 4 referred to as the passenger compartment 12.

The passenger compartment 12 can be divided into several main sections. An inner floor 14 is supported by the vehicle base 4, and at a height between the inner floor 14 and the roof 10 of the passenger compartment 12 is an inner ceiling 16 that is supported by the vehicle walls 6 and/or support rails 18. The support rails 18 are connected to the roof 10 and/or walls 6.

A volume 22 is located between the roof 10, the inner ceiling 16 and an upper portion 20 of the walls 6 that extends between the inner ceiling 16 and the roof 10. It is within the volume 22 that the apparatus may be installed using the support rails 18 or upper portions 20 of the walls 6 and roof 10 to support the apparatus. A fluid flow system duct 30 located within the volume 22 is mounted from below onto the support rails 18 that are located between the inner ceiling 16 and the roof 10.

A fluid flow system duct 30 comprising at least one intake port 32 that penetrates the inner ceiling 16, and at least one outlet port 34 that penetrates an upper portion of the fluid flow system duct 30. An extraction fan 36 is mounted within the outlet port 34. The intake port 32 has a filter 38 mounted within the intake port 32 to prevent dust and other solids from entering the fluid flow system duct 30 and depositing on the electrical equipment 70.

The fluid flow system duct 30 is an air-duct and as can be seen by the direction of air flow arrows, from the intake port 32 to the outlet port 34, this air-duct system takes used air from within the passenger compartment 12 and expels the used air through outlet port 34 using at least one extraction fan 36. The air does not re-enter the passenger compartment 12, that is the air is not re-circulated within the railway passenger carriage 2 and is fully expelled from the railway passenger carriage 2 for safety reasons as previously discussed. Again, these features are of a conventional, known design and construction.

The inner ceiling 16 has at least one access opening 40 positioned at suitable locations along the inner ceiling 16. In a preferred embodiment, these access openings 40 may be above passenger aisles, and longitudinally spaced along the railway passenger carriage 2 as seen in figure 1. The access opening 40 penetrates through the inner ceiling 16 and through the base surface of the fluid flow system duct 30.

There is at least one access panel 42 that has an articulated hinge 44 that defines a first access axis of rotation on one edge of the access panel 42. The articulated hinge 44 is mounted in a corresponding position on one edge of the access opening 40. The access panel 42 is designed such that when in the stowed position, as shown in figure 1a, the access panel 42 lies flush with the inner ceiling 16 and the access opening 40 is fully covered by the access panel 42.

Between the access panel 42 and the access opening 40 is at least one supporting arm 50, in particular a scissor arm having one intermediate pivot axis, with an upper end 52 movably mounted in a suitable location to the access opening 40 and a lower end 54 movably mounted to the access panel 42. The support arm 50 is designed to support the access panel 42 as the access panel 42 rotates about the first access axis of rotation in a controlled fashion between a stowed position shown in figure la, and an unstowed position shown in Figures 1b, 1c and 1d.

At least one support 60 is positioned within the volume 22, and in this case, within the fluid flow system duct 30. The support 60 is mounted by, among other things, brackets or mounting plates to the surfaces of the fluid flow system duct 30 or alternatively to the support rails 18. The support 60 comprises an articulated structure 62 that supports the electrical equipment 70 between a stowed position shown in Figures 1a and 1b, and an unstowed position shown in Figures 1c and 1d. The articulated structure 62 has one end 64 defining a first support axis of rotation, this one end 64 is connected to the corresponding bracket or mounting plate of the support 60, therefore the support 60 holds the electrical equipment 70 within the fluid flow system duct 30. As the articulated structure 62 rotates about the first support axis of rotation, the electrical equipment 70 held by the articulated structure 62 is moved between the stowed position and the unstowed position.

When the electrical equipment 70 and the access panel 42 are in their respective stowed positions, the base surface of the electrical equipment 70 is substantially parallel to the access panel 42 as shown in figure la. In addition, the articulated structure 62 is also substantially parallel to the access panel 42. When the electrical equipment 70 and the access panel 42 are in their respective unstowed positions, then the base surface of the electrical equipment 70 is substantially parallel to the access panel 42 as shown in figure lc. In this case, the articulated structure 62 is also substantially parallel to the access panel 42.

The support 60 comprises terminals 66 that provide an electrical connection for the electrical equipment 70, the electrical equipment 70 can also be located within receptacles, for example standard drawers. The terminals 66 are electrically connected to the corresponding electrical equipment within the railway passenger carriage 2.

A plurality of translational guides 74 can be mounted within the support 60. The electrical equipment 70 can be mounted onto the translational guides 74. As shown in figure 1d, these translational guides 74 are used to disconnect the electrical equipment terminals 76 from the terminals 66 by translating, in relation to the support 60, the electrical equipment 70 from the support 60 when the support 60 is in the unstowed position.

In this embodiment, the fluid flow system duct 30 serves as a cooling system for the electrical equipment 70 by allowing air to flow through the fluid flow system duct 30 and over the supports 60. Excess heat is taken by the air and expelled out of the outlet port 34. There is no outlet port 34 that directs the air back into the passenger compartment 12. This is for safety reasons, and avoids foul or toxic air from being directed back into the passenger compartment 12 if the electrical equipment 70 overheats or malfunctions.

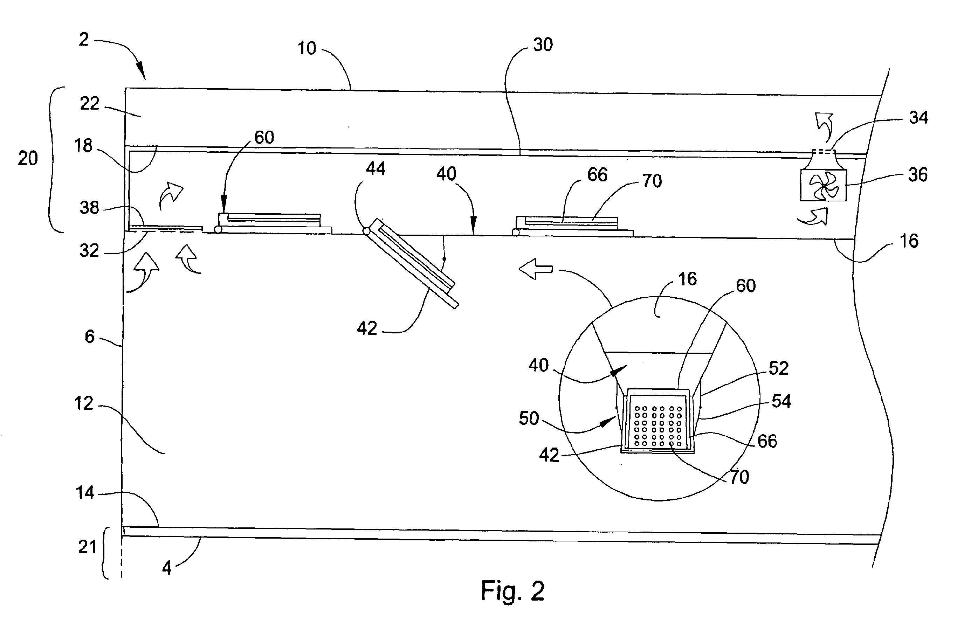

Referring now to figure 2, there is shown a cross sectional view of a railway passenger carriage 2 showing an alternative embodiment of the present invention. Accordingly, the components of the railway passenger carriage 2 in figure 2 common to the railway passenger carriage 2 of figure 1 are indicated using the same reference numerals.

The volume 22 is the space positioned between the inner ceiling 16, the upper portions 20 of the walls 6, and the roof 10, of the railway passenger carriage 2. A support rail 18 may be seen running the length of the roof 10. The inner ceiling 16 has at least one access opening 40 positioned at suitable locations within the inner ceiling 16 as shown in figure 2, in this case, the access openings 40 are longitudinally positioned along the inner ceiling 16 of the passenger compartment 12. The fluid flow system duct 30 is located within the volume 22 between the inner ceiling 16 and the roof 10. The access opening 40 penetrates through the inner ceiling 16 and through the lower wall of a fluid flow system duct 30.

A plurality of intake ports 32 penetrates the inner ceiling 16 and through to the fluid flow system duct 30. A plurality of outlet ports 34 penetrates the upper portion of the fluid flow system duct 30 and the roof 10. The fluid flow system duct 30 is an air duct in which an air flow is created by a plurality of extraction fans 36 mounted within the outlet ports 34. The intake ports 32 have a filter 38 mounted within to prevent dust and other solid particles from soiling the electrical equipment 70.

In figure 2, it can be seen by the direction of air flow arrows, from the intake port 32 through the fluid flow system duct 30 and out the outlet port 34, that the fluid flow system takes used air from within the passenger compartment 12 to the exterior of the railway passenger vehicle 2. The air flow can be used to remove excess heat from the electrical equipment 70. There is no outlet port 34 that directs the air back into the passenger compartment 12. Hence, if the electrical equipment 70 overheats or malfunctions then foul or toxic air will not be directed back into the passenger compartment 12.

There is at least one access panel 42 with at least one portion of the access panel 42 being made of translucent, transparent or light penetrable material. In a preferred embodiment, the support 60 can be affixed to the access panel 42, on top of, the translucent, transparent or opaque portions of access panel 42. There is at least one articulated hinge 44 movably connected to the access panel 42. Each articulated hinge 44 defines a first access axis of rotation on one edge of the access opening 40. The articulated hinge 44 is mounted in a corresponding position on one edge of the access opening 40 about the first access axis of rotation.

The access panel 42 is in the stowed position when the access panel 42 is aligned flush with the inner ceiling 16 as shown on the left and right hand access panels in figure 2. In this position, the access opening 40 is fully covered by the access panel 42. The access panel 42 opens from the stowed position such that it rotates away from the operator until the access panel 42 is in an unstowed position as shown in the centre of access panel 42 of figure 2.

Between the access panel 42 and the access opening 40 is at least one support arm 50, also known as a scissor arm having one intermediate pivot axis, with an upper end 52 movably mounted in a suitable location to the access opening 40 and a lower end 54 movably mounted to the access panel 42. The support arm 50 is designed to support the access panel 42 as the access panel 42 rotates about the first access axis of rotation in a controlled fashion between the stowed position and the unstowed position.

A support 60 is positioned and affixed to the access panel 42. Typically the support 60 is affixed to the side of the access panel 42 that is adjacent to the volume 22. However, there may be alternative ways of affixing the support 60 to the access panel 42.

The support 60 is located within the fluid flow system duct 30 when the access panel 42 is in the stowed position. In this position, the air flow through the fluid flow system duct 30 removes the excess heat from the electrical equipment 70 cooling the electrical equipment 70 and directing the excess heat to the exterior of the vehicle through the outlet port 34. The excess heat is directed away from the passenger compartment 12. When the access panel 42 moves between the stowed position and the unstowed position, the support 60 that is affixed to the access panel 42 simultaneously moves. In this case, the stowed positions of the support 60 and access panel 42 coincide, similarly for the unstowed positions of the support 60 and the access panel 42.

Referring to the right side of figure 2 within the enlarged circle, it can be seen that mounted within the support 60 are terminals 66 for receiving electrical equipment 70. The electrical equipment 70 that can be typically installed inside the support 60 are light emitting diodes, or other forms of illuminating equipment such as fluorescent tubes. However, this description should not be taken to also restrict the use of other types of electrical equipment 70, such as printed circuit boards or other electrical components, which may also be installed inside the support 60. The terminals 66 are electrically connected to the corresponding electrical equipment within the vehicle.

The electrical equipment 70 held within the support 60 are electrically connected with the corresponding equipment within the railway passenger carriage 2 once the terminals 66 are electrically connected to the electrical equipment terminals 76.

When the support 60 and the access panel 42 are in their respective stowed positions then the air flow, provided by the fluid flow system duct 30, flows over the electrical equipment 70 within the support 60 providing cooling. The advantages of cooling the illuminating equipment is that it can improve the expected lifetime and energy consumption of the illuminating equipment, this is particularly the case when the illuminating equipment are light emitting diodes.

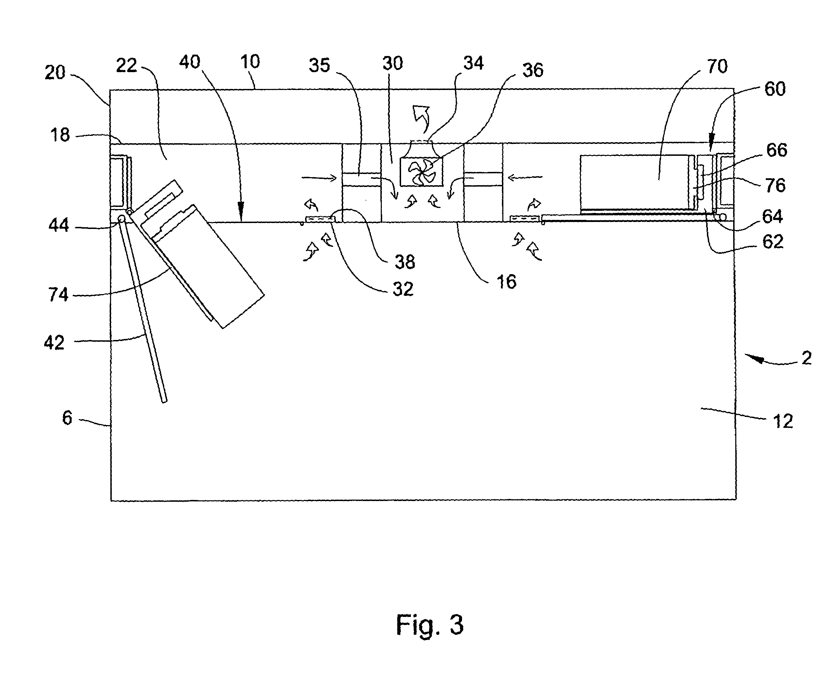

Other embodiments may allow the access opening 40 to penetrate the inner ceiling 16 and volume 22 only. In this case, the support 60 and electrical equipment 70 may not necessarily penetrate the fluid flow system duct 30 surface. However, air may still be in communication with the fluid flow system duct 30 allowing an air flow over the electrical equipment 70 by using other conventional design techniques. For example, using external ducting to connect the volume 22, and air flowing over the electrical equipment 70 with the fluid flow system duct 30 as will be seen in figure 3.

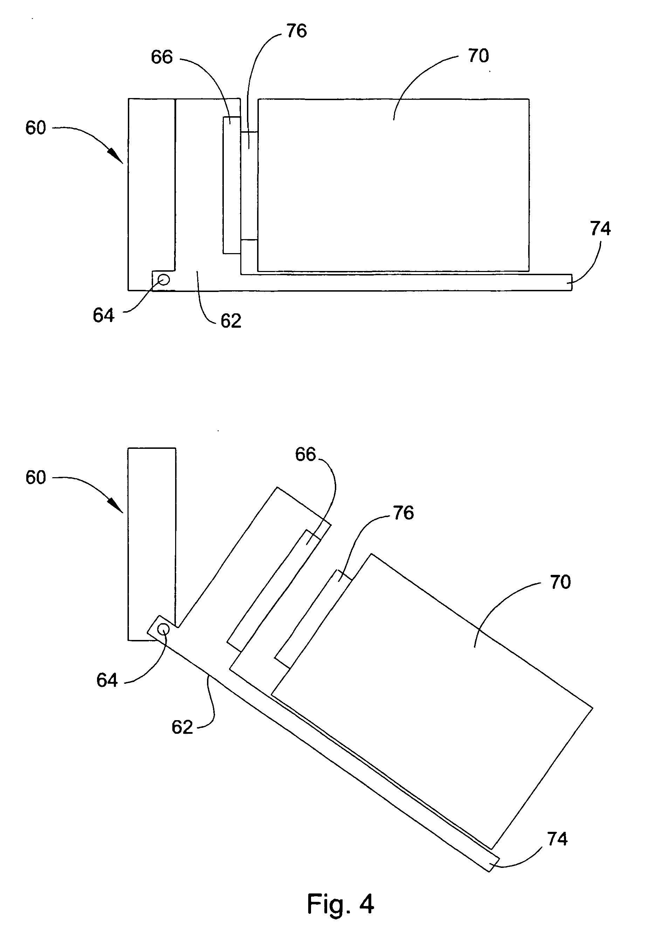

Referring now to figure 3, there is shown a railway passenger carriage 2 showing a further embodiment of the present invention. Figure 4 shows an aspect of the support 60 of the present invention. Accordingly, the components of the railway passenger carriage 2 in figure 3 common to the railway passenger carriage 2 of figure 1 are indicated using the same reference numerals.

The volume 22 is the space that is positioned between the railway passenger carriage's inner ceiling 16, the upper portions 20 of the walls 6, and the roof 10. There is at least one access opening 40 positioned at suitable locations within the inner ceiling 16. These access openings 40 are positioned above the passenger seats and can be longitudinally spaced along inner ceiling 16 of the railway passenger carriage 2. The access opening 40 penetrates through the inner ceiling 16.

In this embodiment, a fluid flow system duct 30 is located over the central axis of the railway passenger carriage 2 between the inner ceiling 16 and the roof 10. The fluid flow system comprising of fluid communication ports 35 that penetrate the vertical walls of the fluid flow system duct 30. The fluid communication ports 35 provide fluid communication between the fluid flow system duct 30 and the volume 22.

A plurality of intake ports 32 penetrate the inner ceiling 16 on either side of the fluid flow system duct 30, and a plurality of outlet ports 34 penetrates the upper portion of the fluid flow system duct 30 and the roof 10. In this case the fluid flow system duct 30 is an air duct and the air flow is provided by at least one extraction fan 36 which are mounted within the outlet port 34. There is at least one filter 38 mounted within at least one intake port 32 to prevent dust and the like from soiling the electrical equipment 70.

It can be seen by the direction of air flow arrows from the intake port 32, through the fluid communication port 35, to the fluid flow system duct 30 and out the outlet port 34, that the fluid flow system takes used air from within the passenger compartment 12 to the exterior of the railway passenger vehicle 2. This air can be used to remove excess heat from the electrical equipment 70 and directing the excess heat away from the passenger compartment 12. There is no outlet port 34 that directs the air back into the passenger compartment 12. Hence, if the electrical equipment 70 overheats or malfunctions then foul or toxic air will not be directed back into the passenger compartment 12.

The access panels 42 have an articulated hinge 44 that defines a first access axis of rotation 46 on one edge of the access panel 42, the articulated hinge 44 is mounted in a corresponding position at one edge of the access opening 40. This edge of the access opening 40 is located in a position close to the joint of the inner ceiling 16 and the upper portion 20 of the wall 6, but being perpendicular to the axis of the railway passenger vehicle 2, and running substantially parallel lengthwise of the walls 6.

The access panel 42 is in the stowed position when the access panel 42 is aligned flush with the inner ceiling 16 as seen on the upper right hand side of the passenger compartment 2 in figure 3. The access opening 40 is fully covered by the access panel 42. The articulated hinge 44 supports the access panel 42 and the access panel 42 can be rotated about a first access axis of rotation in a controlled fashion between the stowed position as shown on the right hand side of the passenger compartment 12 in figure 3, and an unstowed position as shown on the left hand side of the passenger compartment 12 in figure 3. The access panel 42 opens from the stowed position such that it rotates away from the operator towards the nearest wall 6 of the railway passenger carriage 2 until the access panel 42 is in the unstowed position.

At least one support 60 is positioned within the volume 22 but between the inner ceiling 16 and the roof 10. The supports 60 are not positioned within the fluid flow system duct 30. However, the fluid communication port 35 provides an air flow through the volume 22 over the supports 60, cooling the electrical equipment 70, to the fluid flow system duct 30. The support 60 is mounted on, brackets or mounting plates, that are affixed to the inner surface of the upper portion 20 of the walls 6. Alternatively, the support 60 may be affixed to the outer surfaces of the fluid flow system duct 30, or onto support rails 18 within the volume 22.

The support 60 comprises an articulated structure 62 that holds the electrical equipment 70. The articulated structure 62 guides the electrical equipment 70 between the stowed position shown on the upper right hand side of the passenger compartment of figure 3, (and the upper portion of figure 4), and the unstowed position shown on the upper left hand side of the passenger compartment 2 of figure 3, (and the lower portion of figure 4). The articulated structure 62 has one end 64 defining a first support axis of rotation, this one end 64 is connected to the corresponding mounting plate or bracket of the support 60, therefore the support 60 holds the electrical equipment 70 within the volume 22. As the articulated structure 62 rotates about the first support axis of rotation, the electrical equipment 70 that is supported by the articulated structure 62 is pivoted between the stowed position to the unstowed position shown in figures 3 and 4.

When the support 60 and the access panel 42 are in their respective stowed positions, then the base surface of the electrical equipment 70 is substantially parallel to the access panel 42 as shown in figure 3. When the support 60 and access panel 42 are in their respective unstowed positions then the base surface of the support 60 does not necessarily have to be substantially parallel to the access panel 42 as shown in figure 3. However, this in no way limits the base surface of the support 60 from being substantially parallel to the access panel 42.

Mounted within the support 60 are terminals 66, these terminals 66 providing an electrical connection for the electrical equipment 70 through the electrical terminals 76. The terminals 66 are also electrically connected to the corresponding electrical equipment within the vehicle.

When the support 60 and the access panel 42 are in their respective stowed positions then the fluid flow system provides cooling to the electrical equipment 70 within the support 60. The equipment is cooled by allowing used air to flow over the electrical equipment 70 through the fluid communication port 35, then through the fluid flow system duct 30, and finally through the outlet port 36.

A plurality of translational guides 74 are mounted within the support 60. The electrical equipment 70 is mounted onto the translational guides 74. These translational guides 74 can be used to disconnect the electrical equipment terminals 76 from the terminals 66 by translating the electrical equipment 70 from the support 60 when the support 60 is in the unstowed position, as shown on the left hand side of the passenger compartment 12 in figure 3, (and the lower portion of figure 4). This defines an alternative preferred embodiment of the invention to that of figure 1.

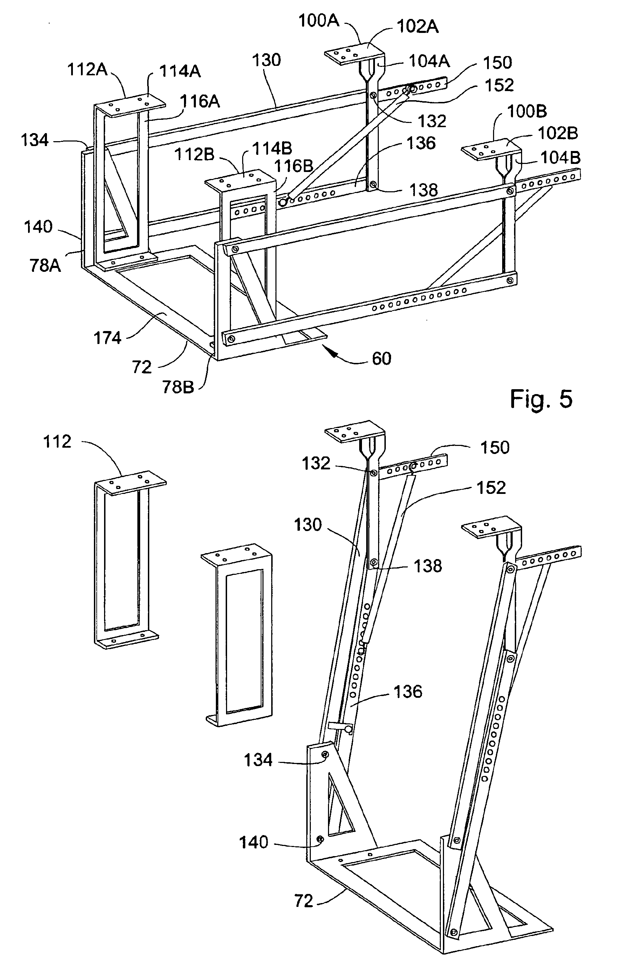

Turning to figure 5 there is shown a perspective view of an aspect of the support 60 which may be used in a further aspect of the present invention. Figure 5 shows the support 60 in the stowed position, and a shaded version of the support 60 in the unstowed position. Accordingly, if a reference label is not referenced in figure 5, it refers to the common references in the previous figures.

The support 60 that is shown in figure 5 can be applied to the previous preferred embodiments of the invention when the support 60 is separate from the access panel 42. The support 60 has rear mounting brackets 100A and 100B, and forward mounting brackets 112A and 112B.

The rear mounting bracket 100A comprises a horizontal rear mounting plate 102A that is affixed to a vertical rear mounting linkage 104A. The rear mounting bracket 100B is similarly described with a horizontal rear mounting plate 102B and vertical rear mounting linkage 104B. The forward mounting bracket 112A comprises a horizontal forward mounting plate 114A and a vertical forward support arm 116A. The forward mounting bracket 112B is similarly described.

The rear mounting brackets 100A and 100B are separated approximately by the width of the equipment mount 72. The forward mounting brackets 112A and 112B are also separated approximately by the width of the equipment mount 72. The rear mounting bracket 100A is separated from the forward mounting bracket 112A by a length that may be determined by the design of the support 60, such that the electrical equipment 70, that can be mounted on the equipment mount 72 can be used and accessed by an operator when in the unstowed position. The rear mounting bracket 100B is similarly separated from the forward mounting bracket 112B.

The mounting brackets (100A, 100B, 112A, 112B) are used to mount the support 60, onto the inner walls enclosing the volume 22, or onto support rails 18, using the mounting plates (102A, 102B, 112A, 112B). The support rails 18 may run through the volume 22. The forward support arms 116A and 116B support the equipment mount 72 when the support 60 is in the stowed position.

The equipment mount 72 comprises a horizontal quadrilateral frame 174, with two linkages 78A and 78B affixed vertically to two opposing edges of the horizontal quadrilateral frame 174. Electrical equipment 70 may be mounted onto the quadrilateral frame 174 and/or mounted onto the facing surfaces of the linkages 78A and 78B.

The support 60 is symmetrical about a vertical plane of symmetry and will now be described with reference to the rear mounting linkage 104A. The rear mounting linkage 104A forms a rear edge of an articulated quadrilateral, with an upper strut 130 and lower strut 136 forming the upper and lower edges, and the linkage 78A forming the front edge of the articulated quadrilateral.

The upper rear end 132 of the upper strut 130 is rotatably mounted to the rear mounting linkage 104A, this connection forms a first upper axis of rotation. The lower rear end 138 of the lower strut 136 is rotatably mounted a distance below the upper rear end 132 to the rear mounting linkage 104A, this connection forms a first lower axis of rotation. The upper and lower ends, 132 and 138, constitute an effective first axis of rotation.

The upper front end 134 of the upper strut 130 is rotatably connected to an upper portion of the linkage 78A, the connection of the upper front end 134 to the linkage defining a second upper axis of rotation. The lower front end 140 of the lower strut 136 is rotatably connected to a portion of the linkage 78A that is lower than the position of the upper front end 134, the connection of the lower front end 140 to the linkage 78A defining a second lower axis of rotation. The upper and lower front ends, 134 and 140, constitute an effective second axis of rotation. The upper strut 130, lower strut 136, mounting linkage 104A, and linkage 78A, form an articulated parallelogram.

There is a support arm bracket 150 that is affixed on the mounting linkage 104A at a position close to where the rear upper end 132 connects to the mounting linkage 138, where the support arm bracket 150 does not interfere in the rotation of the rear upper end 132. The support arm bracket 150 is affixed to the mounting linkage 104A, such that it is parallel to the upper strut 130 when the equipment mount 72 is in the stowed position. However, the support arm bracket 150 projects in the opposite direction away from the rear upper end 132 of the mounting linkage 104A.

There is a supporting arm 152, in which one end of the supporting arm is rotatably connected to the support arm bracket 150, and the other end of the supporting arm 152 is rotatably connected to the lower strut 136, this second connection being in a suitable position along the lower strut 136 such that the supporting arm 152 can support the equipment mount 72 between the stowed position and the unstowed position 156. The supporting arm 152 should allow and hold the equipment mount 72 and upper and lower struts, 130 and 136, between the stowed position and the unstowed position in a controlled fashion. Examples of supporting arms 152 can be, but are not limited to, scissor arms, gas springs, dampers, lid supports, door checks, lid supports or stays, soft down supports or stays, spring loaded supports or stays, folding brackets, or telescopic props, or a system of counter balances and weights.

When the equipment mount 72 is moved between the stowed position to the unstowed position, the upper strut 130 and lower strut 136 rotates about the first upper and first lower axes of rotation, however, the equipment mount 72 rotates about the second upper and second lower axes of rotation such that the equipment mount 72, and hence the electrical equipment 84 is translated in relation to the volume 22 from between the stowed position and the unstowed position.

It will be appreciated that the present invention in general and by way of specific aspects and embodiments provides a means whereby electrical equipment can be efficiently and safely stored, cooled, and maintained within a vehicle, in particular the use of existing hardware such as fluid flow system ducts are efficiently reapplied without the need for an external cooling system resulting in an efficient dual purpose storage and maintenance apparatus for electrical equipment. In this respect, the present invention represents a significant advantage over established and conventional forms of storing and cooling electrical equipment, which by their very nature do not improve the safety and use of existing resources, such as space and energy, currently available within a vehicle.

While the present invention has been shown and described with reference to particular illustrative embodiments it will be understood by those skilled in the art that various changes in form and detail may be made without departing from the scope of the invention as defined in the appended claims.

## Claims

1. A railway vehicle (2) comprising:
- a passenger compartment (12);
- an electrical equipment (70);
- a volume (22) for storing the electrical equipment (70), the volume being located within an air duct (30), the volume comprising a space between an inner ceiling (16) of the passenger compartment (12) and the vehicle's roof (10) and an upper portion (20) of the vehicle's walls (6), the volume (22) comprising at least one access opening (40);
- at least one support (60) comprising terminals (66) for providing an electrical connection for the electrical equipment (70), the support (60) including an articulated structure (44, 62) supporting the electrical equipment, the articulated structure with one end defining a first axis of rotation of the support (60) for moving the electrical equipment (70) between a stowed position within the volume and an unstowed position for accessing the electrical equipment; **characterized by**
- at least one extraction fan (36) for expelling used air from within the vehicle (2) such that the air duct (30) does not re-circulate the used air within the vehicle (2), wherein when the electrical equipment is in the stored position the air flow through the air duct (30) removes excess heat from the electrical equipment (70) cooling the electrical equipment (70) and directing the excess heat to the exterior of the vehicle.

2. The railway vehicle of claim 1, wherein a filter (38) is affixed to at least one intake port (32) of the air-duct (30).

3. The railway vehicle of any preceding claim, wherein the at least one access opening (40) is covered by at least one access panel (42) articulated to one edge of the access opening via an articulated hinge (44).

4. The railway vehicle of claim 3, wherein the articulated hinge defines the first axis of rotation and the support (60) is affixed to the access panel (42).

5. The railway vehicle of any of claims 3 or 4, wherein a supporting arm (50) can hold the access panel (42) at an angle that is suitable for a person to access the electrical equipment (70).

6. The railway vehicle of any preceding claim, wherein the electrical equipment (70) is pivotable between the stowed position and the unstowed position.

7. The railway vehicle of any of claims 1 to 3, wherein at least one portion of the articulated structure (62) has a linkage (78) that defines a second axis of rotation.

8. The railway vehicle of claim 7, wherein the linkage (78) rotates the electrical equipment (70) about the second axis of rotation between the stowed position and unstowed position.

9. The railway vehicle of claim 8, wherein the electrical equipment (70) is also translated in relation to the volume (22) between the stowed position and the unstowed position.

10. The railway vehicle of any preceding claim, wherein a plurality of translational guides (74) are mounted on each support (60) for providing mounting means for mounting the electrical equipment (70).

11. The railway vehicle of any preceding claim, wherein the railway vehicle is a railway passenger carriage (2).

## Patentansprüche

1. Schienenfahrzeug (2), umfassend:
- einen Fahrgastraum (12);
- eine elektrische Ausrüstung (70);
- ein Volumen (22) zum Aufbewahren der elektrischen Ausrüstung (70), wobei das Volumen sich in einem Luftkanal (30) befindet, wobei das Volumen einen Raum zwischen einer inneren Decke (16) des Fahrgastraums (12) und dem Dach (10) des Fahrzeugs und einem oberen Teil (20) der Wände (6) des Fahrzeugs umfasst, wobei das Volumen (22) wenigstens eine Zugangsöffnung (40) aufweist;
- wenigstens einen Träger (60), der Anschlüsse (66) zum Bereitstellen einer elektrischen Verbindung für die elektrische Ausrüstung (70) aufweist, wobei der Träger (60) eine gelenkige Konstruktion (44, 62) hat, welche die elektrische Ausrüstung trägt, wobei die gelenkige Konstruktion mit einem Ende eine erste Drehachse des Trägers (60) zum Bewegen der elektrischen Ausrüstung (70) zwischen einer verstauten Position in dem Volumen und einer unverstauten Position für Zugriff auf die elektrische Ausrüstung definiert; **gekennzeichnet durch**
- wenigstens ein Sauggebläse (36) zum Ausstoßen verbrauchter Luft aus dem Inneren des Fahrzeugs (2), so dass der Luftkanal (30) die verbrauchte Luft nicht im Fahrzeug (2) umwälzt, wobei, wenn sich die elektrische Ausrüstung in der verstauten Position befindet, die Luftströmung **durch** den Luftkanal (30) überschüssige Wärme von der elektrischen Ausrüstung (70) entfernt, was die elektrische Ausrüstung (70) kühlt, und die überschüssige Wärme aus dem Fahrzeug hinaus leitet.

2. Schienenfahrzeug nach Anspruch 1, bei dem an wenigstens einer Einlassöffnung (32) des Luftkanals (30) ein Filter (38) befestigt ist.

3. Schienenfahrzeug nach einem der vorhergehenden Ansprüche, bei dem die wenigstens eine Zugangsöffnung (40) von wenigstens einer Abdeckplatte (42) bedeckt ist, die über ein gelenkiges Gelenk (44) am Rand der Zugangsöffnung angelenkt ist.

4. Schienenfahrzeug nach Anspruch 3, bei dem das gelenkige Gelenk die erste Drehachse definiert und der Träger (60) an der Abdeckplatte (42) befestigt ist.

5. Schienenfahrzeug nach Anspruch 3 oder 4, bei dem ein Tragarm (50) die Abdeckplatte (42) in einem Winkel halten kann, der für eine Person zum Zugreifen auf die elektrische Ausrüstung (70) geeignet ist.

6. Schienenfahrzeug nach einem der vorhergehenden Ansprüche, bei dem die elektrische Ausrüstung (70) zwischen der verstauten Position und der unverstauten Position geschwenkt werden kann.

7. Schienenfahrzeug nach einem der Ansprüche 1 bis 3, bei dem wenigstens ein Teil der gelenkigen Konstruktion (62) eine Verbindung (78) hat, die eine zweite Drehachse definiert.

8. Schienenfahrzeug nach Anspruch 7, bei dem die Verbindung (78) die elektrische Ausrüstung (70) zwischen der verstauten Position und der unverstauten Position um die zweite Drehachse dreht.

9. Schienenfahrzeug nach Anspruch 8, bei dem die elektrische Ausrüstung (70) auch im Verhältnis zu dem Volumen (22) zwischen der verstauten Position und der unverstauten Position verschoben wird.

10. Schienenfahrzeug nach einem der vorhergehenden Ansprüche, bei dem an jedem Träger (60) mehrere Translationsführungen (74) montiert sind zum Bereitstellen von Montagemitteln zum Montieren der elektrischen Ausrüstung (70).

11. Schienenfahrzeug nach einem der vorhergehenden Ansprüche, wobei das Schienenfahrzeug ein Reisezugwagen (2) ist.

## Revendications

1. Véhicule ferroviaire (2) comprenant :
- un compartiment passagers (12) ;
- un équipement électrique (70) ;
- un volume (22) destiné à stocker l'équipement électrique (70), le volume étant situé à l'intérieur d'un conduit d'air (30), le volume comprenant un espace entre un plafond interne (16) du compartiment passagers (12) et le toit du véhicule (10) et une portion supérieure (20) des parois du véhicule (6), le volume (22) comprenant au moins une ouverture d'accès (40) ;
- au moins un support (60) comprenant des bornes (66) destinées à fournir une connexion électrique pour le matériel électrique (70), le support (60) incluant une structure articulée (44, 62) supportant le matériel électrique, la structure articulée avec une extrémité définissant un premier axe de rotation du support (60), afin de déplacer l'équipement électrique (70) entre une position rentrée à l'intérieur du volume et une position non rentrée, afin d'avoir accès au matériel électrique ; **caractérisé par**
- au moins un ventilateur d'extraction (36) destiné à expulser l'air accumulé de l'intérieur du véhicule (2), de telle sorte que le conduit d'air (30) ne remet pas en circulation l'air utilisé à l'intérieur du véhicule (2), dans lequel, lorsque le matériel électrique est en position rentrée, le flux d'air qui traverse le conduit d'air (30) enlève la chaleur en excès du matériel électrique (70) en refroidissant le matériel électrique (70) et en dirigeant la chaleur en excès vers l'extérieur du véhicule.

2. Véhicule ferroviaire selon la revendication 1, dans lequel un filtre (38) est fixé sur au moins un port d'entrée (32) du conduit d'air (30).

3. Véhicule ferroviaire selon l'une quelconque des revendications précédentes, dans lequel la au moins une ouverture d'accès (40) est recouverte par au mois un panneau d'accès (42) articulé sur un bord de l'ouverture d'accès via une charnière articulée (44).

4. Véhicule ferroviaire selon la revendication 3, dans lequel la charnière articulée définit le premier axe de rotation et le support (60) est fixé sur le panneau d'accès (42).

5. Véhicule ferroviaire selon l'une quelconque des revendications 3 ou 4, dans lequel un bras de support (50) peut retenir le panneau d'accès (42) suivant un angle qui convient pour qu'une personne puisse accéder au matériel électrique (70).

6. Véhicule ferroviaire selon l'une quelconque des revendications précédentes, dans lequel le matériel électrique (70) peut pivoter entre la position rentrée et la position non rentrée.

7. Véhicule ferroviaire selon l'une quelconque des revendications 1 à 3, dans lequel au moins une portion de la structure articulée (62) a une liaison mécanique (78) qui définit un second axe de rotation.

8. Véhicule ferroviaire selon la revendication 7, dans lequel la liaison mécanique (78) fait tourner le matériel électrique (70) autour du second axe de rotation entre la position rentrée et la position non rentrée.

9. Véhicule ferroviaire selon la revendication 8, dans lequel le matériel électrique (70) est également translaté par rapport au volume (22) entre la position rentrée et la position non rentrée.

10. Véhicule ferroviaire selon l'une quelconque des revendications précédentes, dans lequel une pluralité de guides de translation (74) sont montés sur chaque support (60) afin de former des moyens de montage destinés à monter le matériel électrique (70).

11. Véhicule ferroviaire selon l'une quelconque des revendications précédentes, dans lequel le véhicule ferroviaire est une voiture ferroviaire (2) pour passagers.
